(19) **Europäisches Patentamt**
**European Patent Office**
**Office européen des brevets**

(11) **EP 2 327 217 B1**

(12) **FASCICULE DE BREVET EUROPEEN**

(45) Date de publication et mention
de la délivrance du brevet:
**04.07.2012 Bulletin 2012/27**

(21) Numéro de dépôt: **09741374.4**

(22) Date de dépôt: **04.09.2009**

(51) Int Cl.:
***H04N 7/26*** (2006.01)

(86) Numéro de dépôt international:
**PCT/FR2009/051677**

(87) Numéro de publication internationale:
**WO 2010/026350 (11.03.2010 Gazette 2010/10)**

(54) **PROCÉDÉ DE CODAGE PAR BLOCS D'UNE IMAGE MATRICIELLE DE PIXELS, PROGRAMME D'ORDINATEUR ET DISPOSITIF DE CAPTURE D'IMAGES CORRESPONDANTS**

BLOCKKODIERUNGSVERFAHREN FÜR EIN BITMAP-PIXEL-BILD UND ENTSPRECHENDES COMPUTERPROGRAMM UND BILDERFASSUNGSGERÄT

BLOCK ENCODING METHOD FOR BITMAP PIXEL IMAGE, AND CORRESPONDING COMPUTER PROGRAM AND IMAGE CAPTURE DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.09.2008 FR 0804892**

(43) Date de publication de la demande:
**01.06.2011 Bulletin 2011/22**

(73) Titulaire: **COMMISSARIAT A L'ENERGIE ATOMIQUE ET AUX ENERGIES ALTERNATIVES 75015 Paris (FR)**

(72) Inventeur: **ALACOQUE, Laurent F-38340 Voreppe (FR)**

(74) Mandataire: **Bonnet, Michel et al Cabinet Bonnet 93, Rue Réaumur - Boîte 10 75002 Paris (FR)**

(56) Documents cités:
**EP-A- 0 817 494          EP-A- 1 737 241**
**US-A1- 2004 136 602      US-A1- 2004 218 825**
**US-A1- 2006 245 655**

## Description

La présente invention concerne un procédé de codage par blocs d'une image matricielle de pixels. Elle concerne également un programme d'ordinateur comprenant des instructions de code de programme et un dispositif de capture d'images conçus pour l'exécution des étapes d'un tel procédé de codage.

Plus précisément, l'invention concerne un procédé de codage par blocs d'une image constituée d'une pluralité de blocs disjoints, par décompositions bidimensionnelles successives des blocs de cette image dans une base de fonctions discrètes prédéterminée à l'aide de l'application combinée d'un noyau unidimensionnel de décomposition verticale de n pixels et d'un noyau unidimensionnel de décomposition horizontale de p pixels, la direction horizontale des blocs étant définie comme étant celle des lignes de l'image matricielle dans un mode de lecture et/ou de transmission séquentielle ligne par ligne de l'image matricielle, dans lequel :

- la dimension horizontale P en nombre de pixels de chaque bloc est déterminée comme étant un multiple de p, P = k.p, et une décomposition à $\log_p(P)$ niveau(x) de résolution est réalisée à l'aide du noyau unidimensionnel de décomposition horizontale, et
- la dimension verticale N en nombre de pixels de chaque bloc est déterminée comme étant un multiple de n, N = l.n, et une décomposition à $\log_n(N)$ niveau(x) de résolution est réalisée à l'aide du noyau unidimensionnel de décomposition horizontale.

Par « noyau », on entend de façon classique une fonction discrète élémentaire à partir de laquelle est construite ladite base de fonctions discrètes prédéterminée, notamment par dilatations (variations fréquentielles) et/ou par translations (variations spatiales) du noyau.

En outre, en codage d'images, la décomposition bidimensionnelle d'un bloc de pixels dans une base de fonctions discrètes formant vecteurs de cette base est séparable horizontalement et verticalement. Par conséquent, le noyau à partir duquel la base est construite peut être considéré comme la combinaison d'un noyau unidimensionnel horizontal et d'un noyau unidimensionnel vertical pour la formation de « portions de vecteurs » horizontales et de « portions de vecteurs » verticales.

Par ailleurs, dans la suite de la description, le terme de « projection » sera utilisé, notamment dans des expressions tels que « noyau unidimensionnel de projection horizontale », « noyau unidimensionnel de projection verticale » ou « projection d'ordre ... ».

En effet, en codage d'images, lorsque la décomposition bidimensionnelle d'un bloc de NP pixels est effectuée dans une base de NP fonctions discrètes formant vecteurs de cette base, les NP coefficients obtenus de cette décomposition sont en fait le résultat de projections (au sens mathématique du terme) du bloc de NP pixels sur chacun des vecteurs de la base de NP fonctions discrètes.

Par conséquent, au vu de ce qui précède, parler de projections horizontales ou verticales revient à parler de décompositions unidimensionnelles horizontales ou verticales (comme dans la demande de brevet publiée sous le numéro US 2004/136602 par exemple) ou encore d'opérations de filtrage dans la direction horizontale ou verticale (comme dans la demande de brevet publiée sous le numéro EP 0 817 494 par exemple). En fait, on s'aperçoit que différentes terminologies, empruntées aux domaines du traitement de signal, du codage, des mathématiques appliquées sont couramment utilisées pour désigner les mêmes opérations.

Plus précisément, les opérations qui seront désignées dans la suite de la description par la notion de projections d'ordre $\log_p(P)$ ou $\log_n(N)$ sont clairement des opérations de décomposition à $\log_p(P)$ ou $\log_n(N)$ niveau(x) de résolution (terminologie de US 2004/136602) ou encore correspondent à $\log_p(P)$ ou $\log_n(N)$ opérations consécutives de filtrage (terminologie de EP 0 817 494).Plusieurs méthodes de codage par blocs fonctionnant selon le principe précité sont couramment utilisées tels que notamment le codage par DCT (de l'Anglais « Discrete Cosine Transform ») ou par décomposition dans une base d'ondelettes.

Le codage par DCT, utilisé dans les standards JPEG et MPEG, est en général appliqué à des blocs carrés de 8x8 pixels et est alors envisagé comme une décomposition bidimensionnelle de chacun de ces blocs dans une base de 64 fonctions sinusoïdales discrètes à support infini. Le noyau unidimensionnel des projections verticale et horizontale d'ordre 1 réalisées par cette technique de codage est une fonction cosinus discrète sur 8 pixels de sorte que k = l =1. Ainsi, par ce codage DCT, le signal image est décomposé dans l'espace des fréquences.

Le codage par décomposition dans une base d'ondelettes à support fini, utilisé dans le standard JPEG 2000 est aussi généralement appliqué à des blocs carrés de 8x8 pixels. Un noyau unidimensionnel de projections verticale et horizontale couramment utilisé est un noyau de Haar à 2 pixels (i.e. la fonction mère créneau de Haar classique). Par application de ce noyau horizontalement et verticalement, on réalise une première décomposition d'un bloc 8x8 en quatre sous-blocs 4x4. Puis à un deuxième ordre, le sous-bloc 4x4 des basses fréquences est décomposé en quatre sous-blocs 2x2. Enfin à un troisième ordre, le sous-bloc 2x2 des basses fréquences est décomposé en quatre pixels dont un représentant la composante continue du bloc.

D'autres principes de décomposition, par exemple en sous-bandes fréquentielles, sont également envisageables. Ils ont pour objectif de décorréler l'image initiale pour faciliter, dans un deuxième temps, son codage avec ou sans pertes, notamment grâce à l'utilisation de codes entropiques.

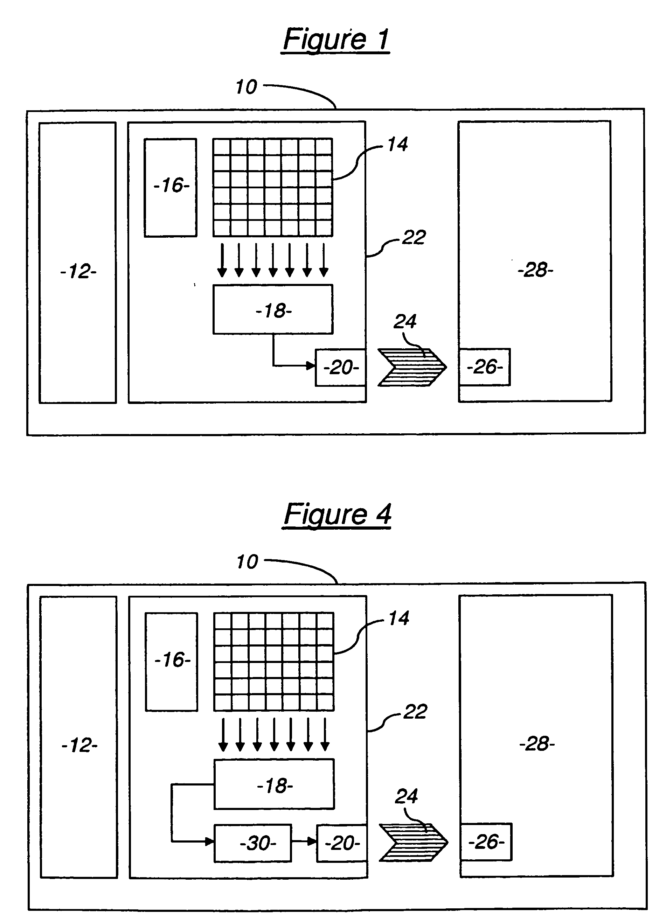

De tels procédés de codage par blocs sont parfois mis en oeuvre dans des dispositifs numériques de capture d'images tels que des capteurs CMOS dont un module optique type est représenté sur la figure 1.

Sur cette figure, un module optique 10 de capteur, par exemple un capteur CMOS, comporte un bloc optique 12 et une matrice 14 d'éléments sensibles, les photodiodes qui, associées à des moyens de lecture électrique non représentés, forment des pixels d'une image à capturer.

La matrice de pixels 14 est associée à un dispositif de séquencement 16 et à un dispositif de conversion analogique/numérique 18, permettant l'acquisition d'une image numérique matricielle de pixels. La matrice de pixels 14, le dispositif de séquencement 16 et le dispositif de conversion analogique/numérique 18 forment, avec une interface 20 de transmission des images numériques acquises, un circuit électronique 22 généralement appelé « circuit imageur » ou « plan focal » du capteur CMOS.

L'interface 20 du circuit imageur 22 est en outre généralement reliée par un lien physique électronique 24 à l'interface 26 de réception d'images numériques d'un circuit coprocesseur graphique 28 qui permet d'implémenter des algorithmes d'amélioration de la qualité des images numériques acquises et de mettre éventuellement en oeuvre un procédé de codage par blocs tel que l'un de ceux précités.

Les dispositifs d'acquisition d'images destinés au grand public tels que les appareils photos numériques ou caméscopes numériques à capteur CMOS, ou les modules optiques de téléphones portables, sont soumis à de nombreuses contraintes.

En particulier, le débit du lien physique électronique 24 entre le circuit imageur 22 et le circuit coprocesseur graphique 28 est limité. A titre d'exemple, le protocole SMIA respecté par un grand nombre de circuits imageurs limite le débit à 400 Mbits/s. Or une vidéo non compressée d'un circuit imageur de 2 Mégapixels codés chacun sur 10 bits à 30 images par secondes nécessite un débit de 600 Mbits/s. Cette contrainte de débit est l'une des raisons pour lesquelles la résolution en mode vidéo est généralement limitée.

En outre, la réduction de la consommation électrique est une contrainte majeure pour les appareils nomades, dont les capteurs d'images. L'une des plus grandes sources de consommation de ces capteurs d'images étant le transfert des données numériques entre le circuit imageur 22 et le circuit coprocesseur graphique 28 par le lien physique électronique 24, le meilleur moyen de réduire cette consommation s'avère être la réduction de la quantité des données transmises.

Enfin, les dernières générations de filtres d'amélioration d'images pouvant être intégrés dans le circuit coprocesseur graphique 28 nécessitent le stockage de plusieurs images successives. Pour des raisons économiques liées aux coûts des mémoires et en raison de l'augmentation de la quantité d'information brute des images, ces algorithmes ne trouvent pas encore leur place dans des dispositifs à faible coût.

Les trois contraintes précitées montrent le besoin d'un procédé de codage d'images performant permettant d'envisager une bonne compression des données numériques acquises, implantable soit dans le circuit coprocesseur graphique 28 pour permettre d'envisager l'utilisation d'algorithmes de filtrage complexes, soit préférentiellement dans le circuit imageur pour limiter le débit transmis par le lien physique électronique 24.

Par ailleurs, il convient de noter que l'augmentation de la résolution spatiale d'un dispositif de capture d'images, quantifiée par le nombre de Mégapixels de son circuit imageur, est aujourd'hui le critère d'innovation principal pour le grand public. En raison du coût des circuits intégrés et de la volonté de miniaturiser les modules optiques, il s'avère donc nécessaire de diminuer la taille des circuits d'imagerie. Ceci a pour conséquence que toute implantation d'un algorithme de codage dans un circuit imageur ou dans un circuit coprocesseur graphique est très fortement contrainte en terme de complexité.

Le document « A CMOS image sensor for focal plane décomposition », de Zhiqiang Lin et al, IEEE International Symposium on Circuits And Systems, vol. 5, pages 5322-5325, mai 2005, décrit un procédé de codage par blocs prévoyant un traitement parallèle des valeurs de pixels acquises au niveau du circuit imageur d'un capteur CMOS qui se dispense donc des besoins en mémoire des procédés de codage par transformation en ondelettes classiques.

En revanche, il nécessite une taille et une complexité des pixels importantes pour réaliser ce traitement parallèle, ce qui est difficilement compatible avec les exigences de miniaturisation des produits destinés au grand public.

Le document « Focal-plane spatially oversampling CMOS image compression sensor », de Ashkan Olyaei et al., IEEE Transactions on Circuits and Systems I, vol. 54, n° 1, pages 26-34, janvier 2007, décrit également un procédé de codage par blocs réalisé dans le circuit imageur. Les noyaux bidimensionnels envisagés varient de 2x2 pixels à 8x8 pixels et la méthode présentée nécessite la mémorisation des valeurs de tous les pixels d'un bloc avant sa décomposition.

En outre, aucun des procédés décrits dans les documents précités ne prend réellement en compte les spécificités des capteurs CMOS grand public qui mettent en oeuvre, dans le dispositif de séquencement 16, un mode de lecture séquentielle des valeurs des pixels d'une image, en mode d'obturation électronique ligne par ligne de la première ligne à la dernière ligne de l'image. Ce mode de lecture par obturations électroniques successives des lignes vise notamment à compenser le manque de sensibilité des capteurs CMOS à bas coût.

Mais les contraintes électroniques, de taille, de consommation et la nécessité d'assurer un mode vidéo imposent aussi aux circuits d'imagerie de fonctionner dans ce mode de lecture. Celui-ci implique qu'une image numérique est par nécessité lue ligne par ligne et que les pixels de deux lignes différentes ne sont pas cohérents temporellement, parce qu'ils ne représentent pas exactement le même instant d'une scène.

Une conséquence de ce mode de fonctionnement est que les différentes lignes ne sont pas complètement corrélées entre elles, alors que les principes de codage précédemment cités supposent une même cohérence horizontale et verticale des images numériques sur lesquelles ils s'appliquent. En outre, pour réaliser un codage par blocs, par exemple de taille 8x8 pixels, d'une image, il faut acquérir séquentiellement et stocker l'ensemble des lignes nécessaires avant d'effectuer le traitement. En raison de la mémoire en général limitée sur un circuit imageur, cette contrainte pose problème.

Il peut ainsi être souhaité de prévoir un procédé de codage qui permette de s'affranchir des problèmes et contraintes précités.

L'invention a donc pour objet un procédé de codage par blocs d'une image matricielle de pixels constituée d'une pluralité de blocs disjoints, comportant une étape de décompositions bidimensionnelles successives des blocs de cette image dans une base de fonctions discrètes prédéterminée à l'aide de l'application combinée d'un noyau unidimensionnel de décomposition verticale de n pixels et d'un noyau unidimensionnel de décomposition horizontale de p pixels, la direction horizontale des blocs étant définie comme étant celle des lignes de l'image matricielle dans un mode de lecture et/ou de transmission séquentielle ligne par ligne de l'image matricielle, dans lequel :

- la dimension horizontale P en nombre de pixels de chaque bloc est déterminée comme étant un multiple de p, P = k.p, et une décomposition à $\log_p(P)$ niveaux de résolution est réalisée à l'aide du noyau unidimensionnel de décomposition horizontale,
- la dimension verticale N en nombre de pixels de chaque bloc est déterminée comme étant un multiple de n, N = l.n, et une décomposition à $\log_n(N)$ niveaux de résolution est réalisée à l'aide du noyau unidimensionnel de décomposition verticale,

et dans lequel, pour des valeurs de n et p données, on choisit les valeurs de k et l de sorte que la dimension verticale N soit strictement inférieure à la dimension horizontale P.

En limitant le nombre de lignes des blocs par rapport au nombre de colonnes, la plus grande cohérence des pixels d'une même ligne par rapport aux pixels d'une même colonne, dans une acquisition séquentielle ligne par ligne des valeurs de pixels, est correctement prise en compte. Ce procédé est donc avantageusement mis en oeuvre dans des dispositifs de capture d'images peu chers et utilisables par un large public. En outre, en limitant davantage le nombre de lignes que le nombre de colonnes d'un bloc, la mémoire d'un dispositif mettant en oeuvre ce procédé est moins sollicitée et il est plus facile d'envisager d'implanter ce procédé dans le circuit imageur.

De façon optionnelle, n = p = 2, les noyaux unidimensionnels de décomposition horizontale et verticale étant des fonctions discrètes de Haar pour une décomposition en ondelettes. Dans ce cas, une implémentation très simple d'un procédé de codage selon l'invention est possible, à l'aide d'additionneurs et de soustracteurs.

De façon optionnelle également, la décomposition bidimensionnelle des blocs de l'image matricielle comporte la combinaison d'une décomposition verticale à 1 niveau de résolution et d'une décomposition horizontale à $\log_2(k) + 1$ niveau(x) de résolution sur des blocs de dimension verticale de N = 2 pixels et de dimension horizontale de P = 2.k pixels. Dans ce cas, la mémoire d'un dispositif mettant en oeuvre ce procédé est très peu sollicitée.

De façon optionnelle également, chaque bloc étant constitué de k sous-blocs disjoints successifs carrés de quatre pixels chacun, la décomposition bidimensionnelle de l'un quelconque des blocs de l'image matricielle comporte une transformation de chacun de ses k sous-blocs à l'aide d'un noyau bidimensionnel de Haar combinant les noyaux unidimensionnels de décompositions verticale et horizontale, puis une décomposition horizontale à $\log_2(k)$ niveaux de résolution à l'aide du noyau unidimensionnel de décomposition horizontale appliquée à k composantes à forte entropie obtenues par la transformation des k sous-blocs.

De façon optionnelle également, un procédé de codage selon l'invention peut en outre comporter les étapes suivantes :

- suite à l'étape de décompositions bidimensionnelles successives des blocs de l'image, fourniture d'un premier train de données binaires constitué de mots à transcoder, et
- transcodage entropique du premier train de données binaires en un second train de données binaires compressé par utilisation d'un code entropique prédéterminé à longueur variable des mots codés pour transcoder chaque mot du premier train de données binaires en un mot transcodé,
  et, sur la base d'un nombre prédéterminé noté B de bits de poids faibles considéré comme représentatif d'un niveau de bruit des mots du premier train de données binaires, il peut comporter l'application des étapes suivantes à chaque mot du premier train de données binaires :

- subdivision du mot en des premier et second sous-mots, le premier sous-mot comportant les B bits de poids faibles du mot et le second sous-mot comportant les autres bits de poids fort du mot,
- application du code entropique prédéterminé au second sous-mot pour obtenir un second sous-mot transcodé, et
- obtention dudit mot transcodé par concaténation du premier sous-mot et du second sous-mot transcodé.

De façon optionnelle également, un procédé de codage selon l'invention peut en outre comporter une étape de lecture séquentielle de valeurs des pixels de l'image ligne par ligne de la première ligne à la dernière ligne de l'image, et, pendant la lecture de N lignes successives comportant au moins un bloc de N lignes et P colonnes, on exécute la décomposition bidimensionnelle dudit au moins un bloc.

De façon optionnelle également, un procédé de codage selon l'invention peut en outre comporter, pendant la lecture des N lignes successives, les étapes suivantes :

- lecture et mémorisation des N - 1 premières lignes successives,
- pendant l'acquisition de la N-ième ligne, exécution de la décomposition bidimensionnelle dudit au moins un bloc de cette ligne.

L'invention a 'également pour objet un dispositif de capture d'images comportant des moyens de lecture séquentielle de valeurs des pixels d'une image ligne par ligne de la première ligne à la dernière ligne de l'image, et des moyens de codage conçus pour l'exécution des étapes d'un procédé de codage tel que défini précédemment.

De façon optionnelle, un dispositif de capture d'images selon l'invention peut comporter un circuit imageur, pour la capture d'images et la conversion analogique/numérique de ces images capturées, et un circuit coprocesseur différent du circuit imageur et relié électroniquement à ce dernier pour un traitement numérique des images capturées, les moyens de codage étant intégrés dans le circuit imageur.

Ce dispositif de capture d'images est par exemple un appareil photo numérique, une caméra ou un caméscope numérique, ou bien un dispositif portable de télécommunication ou de traitement de données quelconque muni d'un tel appareil photo, caméra ou caméscope intégré.

Enfin, l'invention a également pour objet un programme d'ordinateur téléchargeable depuis un réseau de communication et/ou enregistré sur un support lisible par ordinateur et/ou exécutable par un processeur, comprenant des instructions de code de programme pour l'exécution des étapes d'un procédé de codage tel que décrit précédemment, lorsque ledit programme est exécuté sur un ordinateur.

L'invention sera mieux comprise à l'aide de la description qui va suivre, donnée uniquement à titre d'exemple et faite en se référant aux dessins annexés dans lesquels :

- la figure 1, déjà décrite, représente schématiquement la structure générale d'un module optique de capteur d'images de l'état de la technique,
- la figure 2 illustre les étapes successives d'un procédé de codage par blocs selon un mode de réalisation de l'invention,
- la figure 3 illustre un exemple d'implantation du procédé de la figure 2 à l'aide d'additionneurs et de soustracteurs,
- la figure 4 représente schématiquement la structure générale d'un module optique de capteur d'images selon un mode de réalisation de l'invention,
- la figure 5 illustre un exemple de procédé de transcodage pouvant être mis en oeuvre par un dispositif de codage selon l'invention, et
- la figure 6 illustre un exemple d'implantation du procédé de la figure 5 à l'aide de registres à décalages.

Selon un premier aspect de l'invention, un nouveau procédé de codage de source d'une image matricielle de pixels est tout d'abord proposé. Selon un second aspect de l'invention, un codage entropique est ensuite proposé. Il est avantageusement appliqué à un train de données binaires constitué de mots comportant une valeur des paramètres obtenus par le codage de source.

Premier aspect : codage de source par décomposition dans une base de fonctions discrètes prédéterminée

Le procédé de codage qui va maintenant être détaillé porte sur une image acquise par un dispositif de capture appliquant un mode de lecture séquentielle des valeurs des pixels de cette image ligne par ligne, par exemple en mode d'obturation électronique ligne par ligne de la première ligne à la dernière ligne de l'image. Même en mode d'obturation mécanique de la matrice de pixels complète, à partir du moment où la lecture des valeurs des pixels reste séquentielle ligne par ligne, ce procédé est aussi particulièrement adapté.

Pour adapter le codage au mode de lecture séquentielle ligne par ligne, l'image est subdivisée en blocs disjoints de forme rectangulaire dont la dimension verticale est strictement inférieure à la dimension horizontale. On définit la direction horizontale de l'image et des blocs qui la composent comme étant celle des lignes de l'image dans le mode de lecture séquentielle adopté ligne par ligne. On définit par conséquent la direction verticale de l'image et des blocs qui la composent comme étant celle des colonnes de l'image.

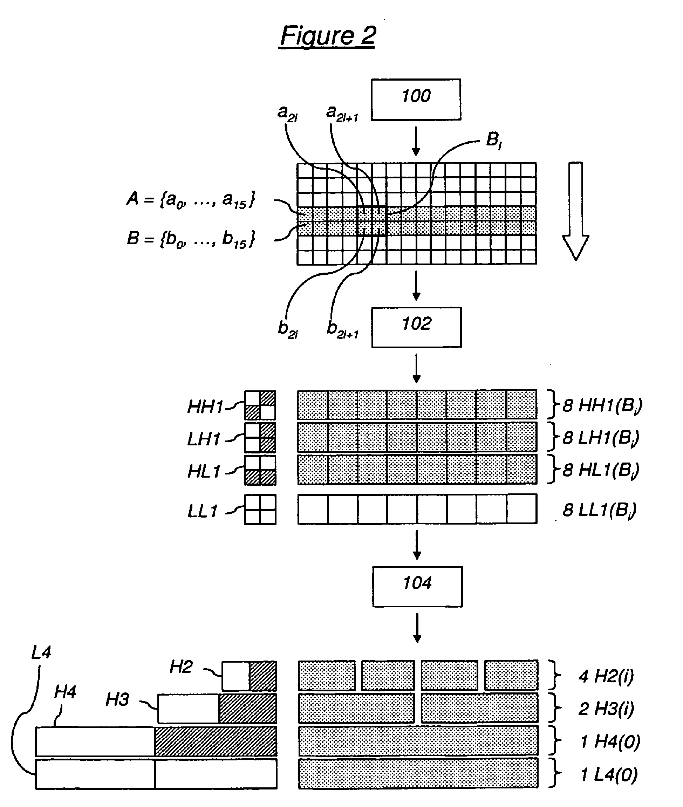

Plus précisément, dans l'exemple non limitatif illustré sur la figure 2, la dimension horizontale P en nombre de pixels de chaque bloc est fixée à 16 et la dimension verticale N en nombre de pixels de chaque bloc est fixée à 2. Chaque bloc comporte donc 32 pixels répartis sur deux lignes successives.

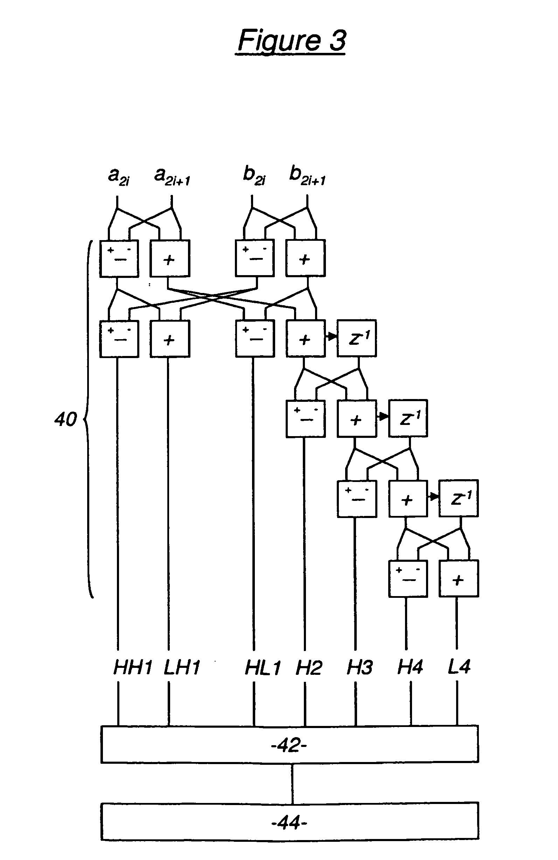

La décomposition bidimensionnelle d'un tel bloc est réalisée dans une base d'ondelettes discrètes de Haar. Selon cette base, les noyaux unidimensionnels de projection verticale et horizontale comportent chacun n = p = 2 pixels, comme cela est bien connu. Une base d'ondelettes de Haar est choisie parce que l'implantation d'une telle décomposition peut être simplement réalisée à l'aide d'additionneurs et de soustracteurs, comme cela sera mis en évidence ci-dessous et en référence à la figure 3.

Ainsi, selon cet exemple, une projection d'ordre $\log_2(2) = 1$ est réalisée verticalement sur chaque colonne de 2 pixels du bloc. Cette projection d'ordre 1 consiste à additionner les 2 pixels pour obtenir un premier paramètre basse fréquence ou à forte entropie et à les soustraire pour obtenir un second paramètre haute fréquence ou à faible entropie.

Selon cet exemple encore, une projection d'ordre $\log_2(16) = 4$ est réalisée horizontalement sur chaque ligne de 16 pixels du bloc. Cette projection d'ordre 4 consiste à :

- additionner les 16 pixels de la ligne considérée deux à deux pour obtenir 8 premiers paramètres basse fréquence ou à forte entropie d'ordre 1 et à les soustraire deux à deux pour obtenir 8 seconds paramètres haute fréquence ou à faible entropie d'ordre 1,
- additionner les 8 paramètres basse fréquence d'ordre 1 (ou à forte entropie) deux à deux pour obtenir 4 premiers paramètres basse fréquence ou à forte entropie d'ordre 2 et à les soustraire deux à deux pour obtenir 4 seconds paramètres haute fréquence ou à faible entropie d'ordre 2,
- additionner les 4 paramètres basse fréquence d'ordre 2 (ou à forte entropie) deux à deux pour obtenir 2 premiers paramètres basse fréquence ou à forte entropie d'ordre 3 et à les soustraire deux à deux pour obtenir 2 seconds paramètres haute fréquence ou à faible entropie d'ordre 3, et
- additionner les 2 paramètres basse fréquence d'ordre 3 (ou à forte entropie) pour obtenir un premier paramètre basse fréquence ou à forte entropie d'ordre 4 et à les soustraire pour obtenir un second paramètre haute fréquence ou à faible entropie d'ordre 4.

De façon équivalente, selon cet exemple, la projection verticale et le premier ordre de la projection horizontale peuvent être réalisés simultanément sous la forme d'une projection bidimensionnelle à l'aide d'un noyau bidimensionnel de Haar, en considérant chaque bloc de 2x16 pixels comme étant constitué de 8 sous-blocs disjoints successifs carrés de 2x2 pixels chacun. Une telle projection génère un paramètre basse fréquence ou à forte entropie et trois paramètres haute fréquence ou à faible entropie par sous-bloc.

Ensuite, une projection horizontale d'ordre 3 est appliquée aux 8 paramètres basse fréquence (ou à forte entropie) obtenus.

Plus précisément, lors d'une première étape de lecture 100, le circuit imageur 22 lit séquentiellement une première ligne A, par exemple en mode d'obturation électronique ligne par ligne. Les valeurs des pixels de cette ligne sont alors mémorisées. Le nombre de pixels dans la première ligne A est avantageusement 16 ou un multiple de 16, c'est-à-dire un multiple de la dimension horizontale d'un bloc.

Ensuite, le circuit imageur 22 lit séquentiellement une seconde ligne B, par exemple en mode d'obturation électronique ligne par ligne.

Pendant la lecture de cette seconde ligne B, on passe à une étape 102 de réalisation d'une projection bidimensionnelle sur chaque bloc de l'ensemble des deux lignes A et B lues. Dans l'exemple illustré sur la figure 2, par souci de simplification uniquement, chaque ligne est considérée comme comportant 16 pixels : en d'autres termes, dans cet exemple particulièrement simple mais pouvant être généralisé, l'ensemble des deux lignes A et B comporte un seul bloc. Les pixels de la ligne A sont notés $a_0$, ..., $a_{15}$ et les pixels de la ligne B sont notés $b_0$, ..., $b_{15}$.

Ce bloc de 32 pixels $a_0$, ..., $a_{15}$ et $b_0$, ..., $b_{15}$ peut être considéré comme constitué de 8 sous-blocs carrés notés $B_i$ ($0 \leq i \leq 7$). Chacun de ces sous-blocs carrés $B_i$ comporte quatre pixels $a_{2i}$, $a_{2i+1}$, $b_{2i}$ et $b_{2i+1}$.

Lors de l'étape 102, on projette chaque sous-bloc carré $B_i$ dans une base constituée de quatre blocs de Haar notés respectivement LL1, HL1, LH1 et HH1. Ces quatre blocs sont représentés sur la figure 2 par des blocs carrés de quatre pixels hachurés (valeurs soustraites) ou blancs (valeurs ajoutées) disposés pour mémoire en partie gauche de l'illustration de l'étape 102, en vis-à-vis des coefficients qu'ils génèrent.

Le premier bloc de Haar LL1 représente une composante basse fréquence. Compte tenu des propriétés générales des images, qui sont en fait essentiellement constituées de zones homogènes différentes les unes des autres séparées par des contours locaux, cette composante basse fréquence est aussi un paramètre à forte entropie. Son coefficient de projection est obtenu par le calcul suivant :

$$LL1\ (B_i) = a_{2i} + a_{2i+1} + b_{2i} + b_{2i+1}.$$

Le deuxième bloc de Haar HL1 représente une composante haute fréquence, ou, plus précisément, haute fréquence verticalement et basse fréquence horizontalement. Compte tenu des propriétés générales des images, qui sont en fait essentiellement constituées de zones homogènes différentes les unes des autres séparées par des contours locaux, cette composante haute fréquence est aussi un paramètre à faible entropie. Son coefficient de projection est obtenu par le calcul suivant :

$$HL1\ (B_i) = a_{2i} + a_{2i+1} - b_{2i} - b_{2i+1}.$$

Le troisième bloc de Haar LH1 représente une composante haute fréquence et à faible entropie, ou, plus précisément, haute fréquence horizontalement et basse fréquence verticalement. Son coefficient de projection est obtenu par le calcul suivant :

$$LH1\ (B_i) = a_{2i} - a_{2i+1} + b_{2i} - b_{2i+1}.$$

Le quatrième bloc de Haar HH1 représente une composante haute fréquence et à faible entropie, ou, plus précisément, haute fréquence horizontalement et haute fréquence verticalement. Son coefficient de projection est obtenu par le calcul suivant :

$$HH1\ (B_i) = a_{2i} - a_{2i+1} - b_{2i} + b_{2i+1}.$$

La projection de tous les sous-blocs carrés $B_i$ dans la base des blocs de Haar précités fournit 4x8 = 32 coefficients. Les 24 coefficients haute fréquence et à faible entropie sont conservés (8 coefficients HL1 ($B_i$), 8 coefficients LH1 ($B_i$), 8 coefficients HH1($B_i$)), tandis que les 8 coefficients basse fréquence et à forte entropie LL1($B_i$) ne sont pas conservés mais sont traités au cours d'une étape 104 de réalisation d'une projection horizontale d'ordre 3. Sur l'illustration de l'étape 102 de la figure 2, les coefficients conservés sont représentés en grisé tandis que les coefficients non conservés sont représentés en blanc.

Lors de l'étape 104, à un premier ordre, on projette chaque paire de coefficients {LL1 ($B_{2i}$) ; LL1 ($B_{2i+1}$)} dans une base constituée de deux blocs de Haar unidimensionnels notés respectivement L2 et H2. Seul le bloc H2 est représenté sur la figure 2 par un bloc rectangulaire de deux « pixels » disposés horizontalement dont l'un est blanc (valeur ajoutée) et l'autre est hachuré (valeur soustraite). Ce bloc H2 est disposé pour mémoire en partie gauche de l'illustration de l'étape 104, en vis-à-vis des coefficients qu'il génère et qui sont conservés. Les coefficients générés par le bloc L2 n'étant pas conservés mais traités à un deuxième ordre de la projection horizontale, ils ne sont pas représentés et le bloc L2 non plus, par souci de simplification de l'illustration de l'étape 104.

Le premier bloc de Haar unidimensionnel L2 représente une composante basse fréquence à forte entropie. Son coefficient de projection est obtenu par le calcul suivant :

$$L2\ (i) = LL1\ (B_{2i}) + LL1\ (B_{2i+1}).$$

Le second bloc de Haar unidimensionnel H2 représente une composante haute fréquence à faible entropie. Son coefficient de projection est obtenu par le calcul suivant :

$$H2\ (i) = LL1\ (B_{2i}) - LL1\ (B_{2i+1}).$$

La projection des quatre paires de coefficients {LL1 ($B_{2i}$) ; LL1 ($B_{2i+1}$)} dans la base des blocs de Haar unidimensionnels précités fournit 8 coefficients. Les 4 coefficients haute fréquence et à faible entropie sont conservés (4 coefficients H2(i)), tandis que les 4 coefficients basse fréquence et à forte entropie L2(i) sont traités à un deuxième ordre de la projection horizontale. Sur l'illustration de la figure 2, les coefficients conservés sont représentés en grisé tandis que les coefficients non conservés ne sont pas représentés.

Au deuxième ordre de la projection horizontale, on projette chaque paire de coefficients {L2 (2i) ; L2 (2i+1)} dans une base constituée de deux blocs de Haar unidimensionnels notés respectivement L3 et H3, identiques à L2 et H2 mais oeuvrant à une échelle double. Seul le bloc H3 est représenté sur la figure 2 par un bloc rectangulaire de deux « pixels » disposés horizontalement dont l'un est blanc (valeur ajoutée) et l'autre est hachuré (valeur soustraite). Ce bloc H3 est disposé pour mémoire en partie gauche de l'illustration de l'étape 104, en vis-à-vis des coefficients qu'il génère et qui sont conservés. Les coefficients générés par le bloc L3 n'étant pas conservés mais traités à un troisième ordre de la projection horizontale, ils ne sont pas représentés et le bloc L3 non plus, par souci de simplification de l'illustration de l'étape 104.

Le premier bloc de Haar unidimensionnel L3 représente une composante basse fréquence à forte entropie. Son coefficient de projection est obtenu par le calcul suivant :

$$L3\ (i) = L2\ (2i) + L2\ (2i+1).$$

Le second bloc de Haar unidimensionnel H3 représente une composante haute fréquence à faible entropie. Son coefficient de projection est obtenu par le calcul suivant :

$$H3\ (i) = L2\ (2i) - L2\ (2i+1).$$

La projection des deux paires de coefficients {L2 (2i) ; L2 (2i+1)} dans la base des blocs de Haar unidimensionnels précités fournit 4 coefficients. Les 2 coefficients haute fréquence et à faible entropie sont conservés (2 coefficients H3(i)), tandis que les 2 coefficients basse fréquence et à forte entropie L3(i) sont traités à un troisième ordre de la projection horizontale. Sur l'illustration de la figure 2, les coefficients conservés sont représentés en grisé tandis que les coefficients non conservés ne sont pas représentés.

Au troisième ordre de la projection horizontale, on projette les deux coefficients L3(0) et L3(1) dans une base constituée de deux blocs de Haar unidimensionnels notés respectivement L4 et H4, identiques à L3 et H3 mais oeuvrant à une échelle double. Le bloc H4 est représenté sur la figure 2 par un bloc rectangulaire de deux « pixels » disposés horizontalement dont l'un est blanc (valeur ajoutée) et l'autre est hachuré (valeur soustraite). Ce bloc H4 est disposé pour mémoire en partie gauche de l'illustration de l'étape 104, en vis-à-vis du coefficient qu'il génère et qui est conservé. Le bloc L4 est représenté sur la figure 2 par un bloc rectangulaire de deux « pixels » blancs disposés horizontalement (valeurs ajoutées). Ce bloc L4 est disposé pour mémoire en partie gauche de l'illustration de l'étape 104, en vis-à-vis du coefficient qu'il génère et qui est conservé.

Le premier bloc de Haar unidimensionnel L4 représente une composante basse fréquence à forte entropie. Son coefficient de projection est obtenu par le calcul suivant :

$$L4\ (0) = L3\ (0) + L3\ (1).$$

Le second bloc de Haar unidimensionnel H4 représente une composante haute fréquence à faible entropie. Son coefficient de projection est obtenu par le calcul suivant :

$$H4\ (0) = L3\ (0) - L3\ (1).$$

La projection des deux coefficients L3(0) et L3(1) dans la base des blocs de Haar unidimensionnels précités fournit 2 coefficients H4(0) et L4(0). Ces 2 coefficients sont conservés et représentés en grisé sur la figure 2.

En conclusion, on conserve 8 coefficients HH1($B_i$), 8 coefficients LH1($B_i$), 8 coefficients HL1($B_i$), 4 coefficients H2(i), 2 coefficients H3(i), 1 coefficient H4(0) et 1 coefficient L4(0) ; soit 32 coefficients. On a ainsi réalisé une transformation inversible formant un codage sans perte qui fournit un seul coefficient à forte entropie, le coefficient L4(0) représentant la moyenne des pixels du bloc considéré.

La figure 3 illustre un exemple d'architecture possible pour mettre en oeuvre le procédé précédemment décrit.

Un premier étage 40 de l'architecture proposée comporte des additionneurs, représentés par des symboles « + », des soustracteurs, représentés par des symboles « - » et des éléments de mémoire, chacun de la taille d'un unique coefficient et représentés par des symboles « $z^{-1}$ ». Ce premier étage 40 réalise les étapes 102, 104 telles que décrites précédemment et fournit, en sortie et au fur et à mesure de la lecture des pixels de la ligne B, les coefficients

HH1(B$_i$), LH1(B$_i$), HL1(B$_i$), H2(i), H3(i), H4(0) et L4(0) (notés HH1, LH1, HL1, H2, H3, H4 et L4 sur la figure 3 et dans la suite de la description par souci de simplification).

On notera que de façon classique, les données fournies par les additionneurs et soustracteurs utilisant les éléments de mémoire « z$^{-1}$ », c'est-à-dire ceux réalisant la projection horizontale d'ordre 3, autrement dit une transformation horizontale de Haar sur 8 paramètres, sont également sous-échantillonnées à chaque ordre de la transformation de sorte qu'il y ait finalement autant de coefficients résultant de la décomposition bidimensionnelle que de pixels à l'origine.

Ensuite, les coefficients HH1, LH1, HL1, H2, H3, H4 et L4 obtenus par cette décomposition bidimensionnelle de chaque bloc sont éventuellement quantifiés dans un bloc de quantification 42 réalisant un codage avec pertes.

En sortie de ce bloc de quantification 42 ou directement après l'étage 40 de codage de source, les coefficients sont transcodés à l'aide d'un bloc de codage entropique 44 réalisant une optimisation de la taille du train de données binaires représentant l'image initiale.

Plus généralement, le procédé précédemment décrit peut être mis en oeuvre par un programme d'ordinateur téléchargeable depuis un réseau de communication et/ou enregistré sur un support lisible par ordinateur et/ou exécutable par un processeur, comprenant des instructions de code de programme pour l'exécution de ses étapes décrites en références à la figure 2.

Il peut être implanté à différents endroits d'un dispositif de capture d'images, notamment dans son circuit de coprocesseur graphique 28, en tant qu'élément de compression permettant le stockage d'images, ou dans son circuit imageur 22. Comme cela est représenté sur la figure 4, il est avantageux de l'implanter sous forme de codeur de source 30 dans le circuit imageur 22. En effet, dans ce cas, le débit supporté par le lien physique électronique 24 est largement réduit.

Sur la figure 4, le codeur de source 30 est représenté en sortie du dispositif de conversion analogique/numérique 18 juste avant l'interface de transmission 20. Selon diverses variantes d'implémentation, il peut aussi être implémenté dans le domaine analogique et se situer en amont du dispositif de conversion analogique/numérique 18, ou bien conçu en un ou plusieurs éléments parallèles situés en bas de colonnes de la matrice de pixels 14, avant ou après le dispositif de conversion 18.

On notera que le dispositif de capture d'images partiellement représenté sur la figure 4 est par exemple un appareil photo numérique, une caméra ou un caméscope numérique, ou bien un dispositif portable de télécommunication ou de traitement de données quelconque muni d'un tel appareil photo, caméra ou caméscope intégré.

Il apparaît clairement qu'un procédé de codage tel que décrit précédemment permet de tirer profit d'un dispositif de capture d'images à mode de lecture séquentielle ligne par ligne. Il peut être aisément implanté dans le circuit d'imageur 22 d'un tel dispositif même si ce circuit est limité en espace de stockage parce qu'il ne nécessite la mémorisation que d'une seule ligne pour effectuer un traitement par blocs, chaque bloc comportant 2 lignes et un plus grand nombre de colonnes.

On notera cependant que l'invention n'est pas limitée au mode de réalisation décrit ci-dessus.

En effet, d'une façon plus générale, si l'espace de stockage du circuit imageur 22 le permet, on peut augmenter le nombre N de lignes des blocs tant qu'il est possible de mémoriser N-1 lignes de pixels pour réaliser le codage par blocs. En choisissant un nombre P de colonnes par blocs toujours strictement supérieur à N, on conserve l'avantage consistant à tirer profit d'une meilleure cohérence horizontale des pixels liée au mode de lecture séquentiel ligne par ligne tout en optimisant l'utilisation des ressources de mémoire.

A l'inverse, il est aussi possible de réduire la dimension verticale des blocs à un seul pixel. Dans ce cas limite, la projection verticale est l'application d'une fonction identité (projection d'ordre 0 avec un noyau unidimensionnel à un pixel). On n'utilise alors plus la cohérence verticale des pixels pour comprimer l'image, mais on utilise encore moins d'espace de stockage.

Enfin, dans l'exemple précédent, il a été présenté un codage utilisant des ondelettes de Haar parce qu'elles impliquent une implémentation simple. Mais il est possible d'envisager d'autres ondelettes, ou même un codage par DCT ou filtrage en sous-bandes sur des blocs rectangulaires. L'invention n'est en effet pas limitée à un codage par blocs et par décompositions bidimensionnelles dans une base de fonctions discrètes en particulier, mais s'applique à tout codage par blocs utilisant d'une façon générale une décomposition bidimensionnelle (séparable horizontalement et verticalement) de chaque bloc dans une base prédéterminée de fonctions discrètes.

Second aspect : codage entropique des paramètres issus du codage de source

Le codage par blocs précédemment décrit transforme NxP pixels de chaque blocs en NxP coefficients. Sa principale finalité, comme tout codage de source, est d'exploiter la redondance spatiale des pixels pour transformer NxP pixels statistiquement très aléatoires en NxP coefficients statistiquement très prévisibles. Il a été vu en effet dans l'exemple précédent que parmi les 32 coefficients HH1, LH1, HL1, H2, H3, H4 et L4 fournis par l'étage 40 de codage de source, seul le coefficient L4 est à entropie élevée. Ceci rend possible la compression avec ou sans perte de l'image au moyen d'un codeur entropique.

L'objectif d'un codage entropique est de transcoder des coefficients de taille fixe à probabilités variables en mots numériques de tailles variables : de façon prédéterminée, les valeurs de coefficients les plus probables sont codées sur un nombre de bits faible ; au contraire, les valeurs de coefficients les moins probables sont codées sur un nombre de bits importants.

Un exemple de procédé de codage entropique adapté à un codage de source décorrélateur du signal d'origine, et tout particulièrement à un procédé de codage par blocs selon l'invention, va maintenant être détaillé.

Statistiquement, les signaux résultant de la différence d'échantillons corrélés du monde réel comme par exemple la différence entre les échantillons successifs d'un signal d'image, de vidéo ou audio, fournissent des coefficients fréquemment proches de zéro et d'autant plus rares qu'ils s'éloignent de zéro en valeur absolue. Les coefficients issus d'un codage par blocs de type DCT ou par ondelettes d'une image numérique vérifient en général cette propriété. Ainsi, tout type de code entropique qui attribue un nombre de bits d'autant plus faible que la valeur du coefficient à transcoder est proche de zéro est particulièrement adapté à ces signaux.

En se référant de nouveau à la figure 3, le train de données binaires fourni par l'étage de codage de source 40, ou éventuellement par le bloc de quantification 42, est constitué d'une succession de mots, chaque mot comportant un bit de signe et un nombre prédéterminé constant de bits pour définir la valeur d'un coefficient correspondant.

Un exemple de code entropique adapté pour transcoder ce train de données binaires est le suivant :

-   si la valeur d'un mot est nulle, le code entropique lui attribue un mot transcodé de deux bits dont le premier est à « 1 » et le second à la valeur du signe du mot,

-   si la valeur d'un mot est non nulle, on détermine la position de son bit à « 1 » de poids le plus élevé, de sorte que le code entropique lui attribue un mot transcodé obtenu par concaténation d'un nombre de bits à « 0 » correspondant à ladite position déterminée, d'un bit à « 1 », du bit de signe du mot et des bits du mot de poids inférieur à son bit à « 1 » de poids le plus élevé.

Autrement dit, ce codage entropique consiste, pour un mot de taille fixe, à coder la position de son bit à « 1 » de poids le plus élevé et son signe à l'aide d'un code de taille variable, puis à concaténer les bits du mot de poids inférieur à ce bit à « 1 » de poids le plus élevé au code de taille variable.

De façon plus concrète, le principe de ce code entropique est fourni dans le tableau suivant, où S désigne le bit de signe du mot binaire à transcoder :

| valeur du coefficient | mot binaire | mot transcodé |
|---|---|---|
| 0 | S000...0000 | 1S |
| +1, -1 | S000...0001 | 01S |
| +2, +3, -2, -3 | S000...001X | 001 SX |
| +4, +5, +6, +7, -4, -5, -6, -7 | S000...01XY | 0001SXY |
| plues généralement | la position du bit à 1 de poids le plus élevé est n | <n zéros> 1S <(n-1) bits de poids faible> |

On vérifie que, pour chaque mot transcodé, le nombre de « 0 » avant le premier « 1 » permet de définir la taille du mot transcodé complet. Les mots transcodés sont donc séparables s'ils sont lus en série dans un train de données binaires transcodées.

Ce codage entropique résulte d'opérations de logique binaire réalisées sur des mots binaires. Par conséquent, l'homme du métier comprendra qu'une variante de ce code, consistant à réaliser des opérations de logique binaire complémentaires sur des compléments à 2 des mots binaires, fonctionne de la même façon. De même, dans l'exemple précédent, il a été choisi par convention de coder la position du bit à « 1 » le plus élevé à l'aide de bits à « 0 » dont le nombre correspond à cette position. L'homme du métier comprendra également qu'une variante de ce code, consistant à choisir une autre convention, fonctionne de la même façon.

On peut donc définir ce code entropique comme faisant partie d'une famille de codes entropiques équivalents comportant les étapes générales suivantes :

-   si un mot n'est pas constitué de bits tous identiques, on détermine la position de son bit de poids le plus faible, dit bit de référence, au delà duquel tous les bits de poids supérieur du mot sont identiques, de sorte que le code entropique lui attribue un mot transcodé obtenu par concaténation d'un nombre de bits à une même valeur prédéterminée, ce nombre correspondant à ladite position déterminée, d'un bit à une valeur complémentaire de ladite même valeur prédéterminée, d'un bit défini en fonction du signe du mot et des bits du mot de poids inférieur à son bit de référence,

- si un mot est constitué de bits tous identiques, le code entropique lui attribue un mot transcodé de deux bits dont le premier est à ladite valeur complémentaire et le second à une valeur définie en fonction du signe du mot.

Bien que particulièrement adapté au procédé de codage présenté selon le premier aspect de l'invention, ce codage entropique a cependant du mal à s'accommoder de la véritable variabilité des statistiques issues des images réelles, notamment à cause du bruit présent sur les bits de poids faibles des coefficients obtenus d'images réelles non traitées.

Pour améliorer la performance du codage entropique, on utilise un paramètre B définissant un seuil de bruit B en nombre de bits de poids faibles considérés comme noyés dans du bruit et ne vérifiant donc pas les statistiques optimales d'un signal d'image décorrélé.

A partir de ce paramètre B, on définit un nouveau procédé de transcodage entropique d'un premier train de données binaires constitué de mots à transcoder en un second train de données binaires compressé par utilisation du code entropique précité pour transcoder chaque mot du premier train de données binaires en un mot transcodé. Sur la base du nombre B de bits de poids faibles représentatif d'un niveau de bruit des mots du premier train de données binaires, il comporte l'application des étapes suivantes à chaque mot du premier train de données binaires :

- subdivision du mot en des premier et second sous-mots, le premier sous-mot comportant les B bits de poids faibles du mot, considérés comme noyés dans le bruit, et le second sous-mot comportant les autres bits de poids fort du mot,
- application du code entropique précité au second sous-mot pour obtenir un second sous-mot transcodé, et
- obtention du mot transcodé final par concaténation du premier sous-mot et du second sous-mot transcodé.

Ainsi, les B premiers bits de poids faibles de chaque mot étant considérés a priori comme ne vérifiant pas les statistiques adaptées à l'application d'un code entropique, ils sont exclus de ce codage qui ne s'applique qu'à une partie de poids fort du mot, de manière à optimiser l'utilisation du code entropique.

Pour B = 3, l'application de cette amélioration au code entropique cité précédemment à titre d'exemple donne concrètement le tableau de transcodage suivant, dans lequel les symboles b désignent les bits considérés comme noyés dans le bruit :

| mot binaire | mot transcodé |
| --- | --- |
| S000...000bbb | 1Sbbb |
| S000...001bbb | 01 Sbbb |
| S000...01Xbbb | 001 SXbbb |
| S000...1XYbbb | 0001SXYbbb |

Cette amélioration pourrait tout aussi bien s'appliquer de la même manière à un autre code entropique adapté au transcodage de trains de données binaires issus de la décorrélation d'un signal réel d'image, de vidéo ou audio.

De manière avantageuse mais non obligatoire, le nombre B est déterminé pour chaque train de données binaires considéré, en fonction de paramètres statistiques de ce train de données. Cela rend le transcodage avantageusement adaptatif. Après transcodage du train de données binaires, le nombre B doit alors être fourni avec le train de données transcodé pour permettre une transformation inverse du signal.

Par exemple, le nombre B de bits de poids faibles représentatif d'un niveau de bruit des mots d'un train de données binaires est choisi comme étant la partie entière de la moyenne des positions du bit à « 1 » de poids le plus élevé des mots de ce train de données binaires.

En logique binaire complémentaire ou par convention, B pourrait être choisi comme étant la partie entière de la moyenne des positions du bit à « 0 » de poids le plus élevé des mots de ce train de données binaires.

Ainsi, exprimé en termes plus généraux, B est choisi comme étant la partie entière de la moyenne des positions du bit de référence des mots de ce train de données binaires.

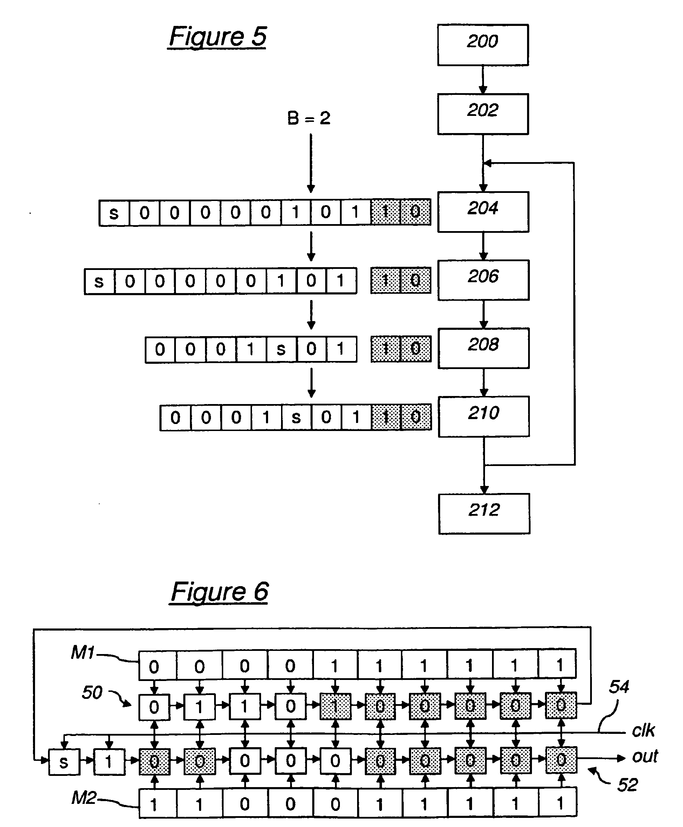

En pratique, le bloc de transcodage 44 peut être conçu pour mettre en oeuvre un procédé tel que celui illustré sur la figure 5.

Au cours d'une première étape 200, le bloc de transcodage 44 reçoit, sous forme d'un premier train de données binaires, une image numérique codée par l'étage de codage de source 40 constituée de coefficients éventuellement quantifiés par le bloc 42.

Au cours d'une étape 202 suivante, un calcul statistique est réalisé sur les mots de ce premier train de données binaires pour déterminer la valeur de B en tant que partie entière de la moyenne des positions du bit à « 1 » de poids le plus élevé de ces mots. A titre purement illustratif, B est par exemple évalué à 2.

Ensuite, lors d'une étape 204 suivante, on démarre une boucle itérative sur l'ensemble des mots du premier train de données binaires pour transcoder chacun d'entre eux. Les mots sont par exemple chacun constitués d'un bit de signe s et de dix bits définissant la valeur d'un coefficient. A titre purement illustratif, un mot « s0000010110 » est pris comme exemple.

Lors d'une étape 206 suivante, ce mot est scindé en deux sous-mots. Le premier sous-mot comporte les B = 2 bits de poids faibles du mot, considérés comme noyés dans le bruit, en l'occurrence « 10 ». Le second sous-mot comporte les autres bits de poids fort du mot et son bit de signe s, soit « s00000101 ».

Au cours d'une étape 208 suivante, on applique le codage entropique cité précédemment au second sous-mot. La position de son bit à « 1 » de poids le plus élevé est 3, de sorte que le codage entropique lui attribue un second sous-mot transcodé obtenu par concaténation de trois bits à « 0 », d'un bit à « 1 », du bit de signe s et des bits du second sous-mot de poids inférieur à son bit à « 1 » de poids le plus élevé. Cela donne le second sous-mot transcodé suivant : « 0001 s01 ».

Enfin, au cours d'une étape 210, un mot transcodé correspondant au mot « s0000010110 » est obtenu par concaténation du second sous-mot transcodé et du premier sous-mot. Cela donne finalement « 0001 s0110 ».

Tant que tous les mots du premier train de données binaires ne sont pas transcodés, on reprend le procédé à l'étape 204.

Sinon, on passe à une étape finale 212 de fin de transcodage par fourniture d'un second train de données binaires transcodées, constitué des mots transcodés précédemment, avec la valeur de B codée sur un nombre prédéterminé de bits. La transmission de B et du second train de données binaires transcodées suffit en effet pour retrouver les coefficients du signal décorrélé.

La figure 6 illustre un exemple d'architecture possible pour mettre en oeuvre le bloc de transcodage 44, lorsque le code entropique précédemment décrit est appliqué.

L'architecture proposée comporte deux registres à décalage 50 et 52 disposés en série. Chaque registre à décalage est composé de cellules comportant, sauf la première, une entrée « in » reliée à une sortie « out » de la cellule précédente. De plus, l'entrée « in » de la première cellule du second registre à décalage 52 est reliée à la sortie de la dernière cellule du premier registre à décalage 50.

Chaque cellule de chaque registre à décalage est en outre reliée à un circuit 54 de fourniture d'un signal d'horloge qui provoque, à chaque coup d'horloge k, le report de l'entrée de chaque cellule sur sa sortie selon la relation out (k) = in (k-1), pour une lecture séquentielle du contenu des registres 50 et 52. Enfin, de façon originale, chaque cellule de chaque registre à décalage comporte une entrée de contrôle supplémentaire qui permet de court-circuiter cette cellule lorsqu'elle est par exemple portée à « 1 ». Autrement dit, lorsque le court-circuit est activé pour une cellule, out (k) = in (k) et la valeur portée par cette cellule n'est pas lue.

L'architecture particulière illustrée sur la figure 6 est adaptée au transcodage de mots de dix bits de valeur et d'un bit de signe. Elle est représentée dans le cas particulier du traitement du mot « s0000010110 » dont le transcodage a été expliqué précédemment.

Le premier registre à décalage 50 comporte autant de cellules que de bits de valeur du mot à traiter, soit dix cellules. Elles sont chargées à la valeur du mot, la première cellule portant le bit de poids le plus faible et la dernière celui de poids le plus fort.

Le second registre à décalage 52 comporte deux cellules de plus que le premier. Ses deux premières cellules sont chargées respectivement au bit de signe du mot et à « 1 ». Les dix suivantes sont chargées à « 0 ».

En logique complémentaire ou selon les conventions choisies, on adaptera bien sûr les valeurs des cellules des registres en fonction de la variante de codage entropique mise en oeuvre.

Les entrées de contrôle des dix cellules du premier registre à décalage 50 sont alimentées respectivement par dix bits d'un premier mot M1 de court-circuit. Les entrées de contrôle des dix cellules chargées à « 0 » du second registre à décalage 52 sont alimentées respectivement par dix bits d'un second mot M2 de court-circuit.

Les premier et second mots M1 et M2 sont définis à partir de la valeur de B et de la position n du bit à « 1 » le plus élevé du mot à transcoder.

Pour cela, on définit un premier mot intermédiaire Mi1 portant, au format binaire et sur dix bits, la valeur $2^B-1$. Par exemple, si B vaut 2, Mi1 vaut « 0000000011 ». On définit aussi un second mot intermédiaire Mi2 portant, au format binaire et sur dix bits, la valeur $2^n-1$. Par exemple, pour le mot « s0000010110 », n vaut 5. Mi2 vaut donc « 0000011111 ». On notera aussi que Mi2/2 vaut « 0000001111 », ce qui correspond à un décalage vers les bits de poids faibles de Mi2.

En pratique, le second mot intermédiaire Mi2 s'obtient très facilement à partir du mot à transcoder. On met son bit de poids le plus élevé à la valeur du bit de poids le plus élevé du mot à transcoder et on descend itérativement vers les bits de poids inférieurs à l'aide d'une relation logique OU entre son bit de rang n et le bit de rang n-1 du mot à transcoder pour définir la valeur de son bit de rang n-1.

Le premier mot M1 est alors défini par la relation logique suivante :

M1 = NON (Mi2/2 OU Mi1).

Dans l'exemple illustré sur la figure 6, cela donne :

M1 = NON ( « 0000001111 » OU « 0000000011 »),
M1 = NON (« 0000001111 »),
M1 = « 1111110000 ».

Le second mot M2 est défini par la relation logique suivante :

M2 = (NON Mi2) OU Mi1.

Dans l'exemple illustré sur la figure 6, cela donne :

M2 = (NON « 0000011111 ») OU « 0000000011 »,
M2 = « 1111100000 » OU « 0000000011 »,
M2 = « 1111100011 ».

Sur la figure 6, les mots M1 et M2 sont représentés de gauche à droite dans le sens ascendant des poids de leurs bits. Chaque fois qu'ils ont un bit à « 1 », ils court-circuitent la cellule correspondante qui est alors représentée en grisé. Les valeurs des cellules grisées n'étant pas transmises par les deux registres à décalage en série, on voit, en remontant les cellules de la dernière cellule du second registre 52 à la première cellule du premier registre 50, que le mot transcodé fourni séquentiellement en sortie du second registre à décalage 52 prend, dans cet exemple, la valeur « 0001 s0110 ».

Il apparaît clairement que le procédé amélioré de transcodage par utilisation d'un codage entropique tel que celui décrit précédemment reste performant même en présence de trains de données binaires portant des valeurs décorrélées mais bruitées.

Lorsqu'en plus la valeur de B est calculée automatiquement à partir de données statistiques extraites des trains de données binaires, cela rend ce procédé de transcodage adaptatif, ce qui est particulièrement avantageux. Le paramètre B étant destiné à prendre une valeur assez faible (i.e. il quantifie un niveau de bruit en nombre de bits a priori noyés dans le bruit), il peut en outre lui-même être codé sur un faible nombre de bits, par exemple trois. Le surcoût de la propriété adaptative du procédé de transcodage est donc négligeable. On notera également que la valeur de B peut être déterminée a priori, sans résulter d'un calcul statistique particulier.

Enfin, il est important de noter que le second aspect de l'invention détaillé en référence aux figures 5 et 6 s'applique avantageusement à un procédé de codage par blocs selon l'invention, notamment au mode de réalisation décrit en référence aux figures 1 à 4 (premier aspect de l'invention).

Mais l'homme de l'art notera que le second aspect de l'invention est indépendant du premier dans la mesure où il est possible de le mettre en oeuvre sans lui fournir en entrée des données nécessairement codées par un procédé selon le premier aspect de l'invention. Il pourrait tout autant s'appliquer avantageusement à d'autres procédés de codage par blocs, par exemple ceux décrits dans l'état de la technique, dont la finalité est de décorréler un signal d'image, de vidéo ou audio initialement fortement corrélé.

Inversement, le procédé de codage décrit selon le premier aspect de l'invention ne comporte pas nécessairement ce procédé de transcodage. Il peut tout autant mettre en oeuvre un procédé de transcodage connu.

**Revendications**

1. Procédé de codage par blocs d'une image matricielle de pixels (14) constituée d'une pluralité de blocs disjoints, comportant une étape (100, 102, 104) de décompositions bidimensionnelles successives des blocs de cette image dans une base de fonctions discrètes (LL1, HL1, LH1, HH1, L2, H2, L3, H3, L4, H4) prédéterminée à l'aide de l'application combinée d'un noyau unidimensionnel de décomposition verticale de n pixels et d'un noyau unidimensionnel de décomposition horizontale de p pixels, la direction horizontale des blocs étant définie comme étant celle des lignes de l'image matricielle dans un mode de lecture et/ou de transmission séquentielle ligne par ligne de l'image matricielle, dans lequel :

- la dimension horizontale P en nombre de pixels de chaque bloc est déterminée comme étant un multiple de p, P = k.p, et une décomposition à $\log_p(P)$ niveau(x) de résolution est réalisée à l'aide du noyau unidimensionnel de décomposition horizontale,

- la dimension verticale N en nombre de pixels de chaque bloc est déterminée comme étant un multiple de n, N = l.n, et une décomposition à $\log_n(N)$ niveau(x) de résolution est réalisée à l'aide du noyau unidimensionnel de décomposition verticale,

**caractérisé en ce que**, pour des valeurs de n et p données, on choisit les valeurs de k et I de sorte que la dimension verticale N soit strictement inférieure à la dimension horizontale P et de sorte que $\log_p(P)$ ainsi que $\log_n(N)$ soient des entiers naturels.

2. Procédé de codage selon la revendication 1, dans lequel n = p = 2, les noyaux unidimensionnels de décompositions horizontale et verticale étant des fonctions discrètes de Haar pour une décomposition en ondelettes.

3. Procédé de codage selon la revendication 2, dans lequel la décomposition bidimensionnelle des blocs de l'image matricielle comporte la combinaison d'une décomposition verticale à 1 niveau de résolution et d'une décomposition horizontale à $\log_2(k) + 1$ niveau(x) de résolution sur des blocs de dimension verticale de N = 2 pixels et de dimension horizontale de P = 2.k pixels.

4. Procédé de codage selon la revendication 3, dans lequel, chaque bloc étant constitué de k sous-blocs ($B_i$) disjoints successifs carrés de quatre pixels chacun, la décomposition bidimensionnelle de l'un quelconque des blocs de l'image matricielle comporte une transformation (102) de chacun de ses k sous-blocs à l'aide d'un noyau bidimensionnel de Haar combinant les noyaux unidimensionnels de décompositions verticale et horizontale, puis une décomposition horizontale (104) à $\log_2(k)$ niveaux de résolution à l'aide du noyau unidimensionnel de décomposition horizontale appliquée à k composantes à forte entropie obtenues par la transformation des k sous-blocs.

5. Procédé de codage selon l'une quelconque des revendications 1 à 4, comportant en outre les étapes suivantes :

   - suite à l'étape (100, 102, 104) de décompositions bidimensionnelles successives des blocs de l'image, fourniture (200) d'un premier train de données binaires constitué de mots à transcoder, et
   - transcodage entropique (202, 204, 206, 208, 210, 212) du premier train de données binaires en un second train de données binaires compressé par utilisation (208) d'un code entropique prédéterminé à longueur variable des mots codés pour transcoder chaque mot du premier train de données binaires en un mot transcodé, et dans lequel, sur la base d'un nombre prédéterminé noté B de bits de poids faibles considéré comme représentatif d'un niveau de bruit des mots du premier train de données binaires, il comporte l'application des étapes suivantes à chaque mot du premier train de données binaires :
   - subdivision (206) du mot en des premier et second sous-mots, le premier sous-mot comportant les B bits de poids faibles du mot et le second sous-mot comportant les autres bits de poids fort du mot,
   - application (208) du code entropique prédéterminé au second sous-mot pour obtenir un second sous-mot transcodé, et
   - obtention (210) dudit mot transcodé par concaténation du premier sous-mot et du second sous-mot transcodé.

6. Procédé de codage selon l'une quelconque des revendications 1 à 5, comportant une étape (100) de lecture séquentielle de valeurs des pixels de l'image ligne par ligne de la première ligne à la dernière ligne de l'image, et dans lequel, pendant la lecture de N lignes successives comportant au moins un bloc de N lignes et P colonnes, on exécute la décomposition bidimensionnelle (102, 104) dudit au moins un bloc.

7. Procédé de codage selon la revendication 6, comportant, pendant la lecture des N lignes successives, les étapes suivantes :

   - lecture et mémorisation (100) des N - 1 premières lignes successives,
   - pendant l'acquisition de la N-ième ligne, exécution (102, 104) de la décomposition bidimensionnelle dudit au moins un bloc de cette ligne.

8. Dispositif de capture d'images comportant des moyens (22) de lecture séquentielle de valeurs des pixels d'une image ligne par ligne de la première ligne à la dernière ligne de l'image, **caractérisé en ce qu'**il comporte des moyens de codage (30) conçus pour l'exécution des étapes d'un procédé de codage selon la revendication 6 ou 7.

9. Dispositif de capture d'images selon la revendication 8, comportant un circuit imageur (22), pour la capture d'images et la conversion analogique/numérique de ces images capturées, et un circuit coprocesseur (28) différent du circuit imageur (22) et relié électroniquement à ce dernier pour un traitement numérique des images capturées, dans lequel les moyens de codage (30) sont intégrés dans le circuit imageur (22).

10. Programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes d'un procédé de codage selon l'une quelconque des revendications 1 à 7 lorsque ledit programme est exécuté sur un ordinateur.

**Claims**

1. A method for block-encoding of a raster image of pixels (14) consisting of multiple separate blocks, including a step (100, 102, 104) of successive two-dimensional decompositions of the blocks of this image in a base of discrete functions (LL1, HL1, LH1, HH1, L2, H2, L3, H3, L4, H4) predetermined using a combined application of a one-dimensional kernel for vertical decomposition of n pixels and of a one-dimensional kernel for horizontal decomposition of p pixels, where the horizontal direction of the blocks is defined as being that of the lines of the raster image in a line-by-line sequential read mode and/or transmission mode of the raster image, wherein:

   - the horizontal dimension P as a number of pixels of each block is determined as being a multiple of p, P = k.p, and a decomposition at $\log_p(P)$ level(s) of resolution is accomplished using the one-dimensional horizontal decomposition kernel,
   - the vertical dimension N as a number of pixels of each block is determined as being a multiple of n, N = I.n, and a decomposition at $\log_n(N)$ level(s) of resolution is accomplished using the one-dimensional vertical decomposition kernel,

   **characterised in that**, for given values of n and p, the values of k and I are chosen such that the vertical dimension N is strictly less than the horizontal dimension P and such that $\log_p(P)$ and $\log_n(N)$ are natural numbers.

2. An encoding method according to claim 1, wherein n = p = 2, the one-dimensional kernels of horizontal and vertical decompositions being discrete Haar functions for a decomposition into wavelets.

3. An encoding method according to claim 2, wherein the two-dimensional decomposition of the blocks of the raster image includes the combination of a vertical decomposition with 1 level of resolution and of a horizontal decomposition with $\log_2(k) + 1$ level(s) of resolution in relation to blocks of vertical dimension N = 2 pixels and horizontal dimension P = 2.k pixels.

4. An encoding method according to claim 3, wherein, since each block consists of k square, successive, separate sub-blocks ($B_i$) of four pixels each, the two-dimensional decomposition of any of the blocks of the raster image includes a transformation (102) of each of its k sub-blocks by means of a two-dimensional Haar kernel combining the one-dimensional vertical and horizontal decomposition kernels, followed by a horizontal decomposition (104) with $\log_2(k)$ levels of resolution using the one-dimensional horizontal decomposition kernel applied to k high-entropy components obtained by the transformation of the k sub-blocks.

5. An encoding method according to any of the claims 1 to 4, further including the following steps:

   - following the step (100, 102, 104) of successive two-dimensional decompositions of the blocks of the image, supply (200) of a first sequence of binary data consisting of words for transcoding, and
   - entropic transcoding (202, 204, 206, 208, 210, 212) of the first sequence of binary data into a second compressed sequence of binary data through the use (208) of a predetermined entropic code involving a variable-length of the encoded words in order to transcode each word of the first sequence of binary data into a transcoded word,
   and wherein, on the basis of a predetermined number, noted B, of low-order bits considered as representative of a noise level of the words of the first sequence of binary data, it includes the application of the following steps to each word of the first sequence of binary data:
   - subdivision (206) of the word into first and second subwords, where the first subword comprises the B low-order bits of the word, and the second subword comprises the other high-order bits of the word,
   - application (208) of the predetermined entropic code to the second subword in order to obtain a second transcoded subword, and
   - obtaining (210) the said transcoded word by concatenation of the first subword and of the second transcoded subword.

6. An encoding method according to any of the claims 1 to 5, including a step (100) of sequential reading of values of the pixels of the image, line-by-line, from the first line to the last line of the image and wherein, during the reading of N successive lines including at least one block of N lines and P columns, the two-dimensional decomposition (102, 104) of the said at least one block is executed.

7. An encoding method according to claim 6, including, during the reading of the N successive lines, the following steps:

- reading and recording (100) of the successive first N-1 lines,
- during acquisition of the Nth line, execution (102, 104) of the two-dimensional decomposition of the said at least one block of this line.

8. An image capture device including means (22) for sequential reading of values of the pixels of an image line-by-line from the first line to the last line of the image, **characterised in that** it includes encoding means (30) designed for the execution of the steps of an encoding method according to claim 6 or 7.

9. An image capture device according to claim 8, including an imaging circuit (22), for the capture of images and the analog/digital conversion of these captured images, and a coprocessor circuit (28) different from the imaging circuit (22) and connected electronically to the latter for digital processing of the captured images, wherein the encoding means (30) are integrated into the imaging circuit (22).

10. A computer program downloadable from a communication network and/or recorded on a medium readable by computer and/or executable by a processor, **characterised in that** it comprises program code instructions for the execution of the steps of an encoding method according to any of the claims 1 to 7 when the said program is executed on a computer.

**Patentansprüche**

1. Verfahren zur blockweisen Codierung eines Pixelrasterbildes (14), das aus mehreren getrennten Blöcken besteht, wobei das Verfahren einen Schritt (100, 102, 104) umfasst, bei dem aufeinanderfolgende zweidimensionale Zerlegungen der Blöcke dieses Bildes in einer Basis von diskreten Funktionen (LL1, HL1, LH1 HH1, L2, H2, L3, H3, L4, H4) ausgeführt werden, die mithilfe der kombinierten Anwendung eines eindimensionalen Kerns zur vertikalen Zerlegung von n Pixeln und eines eindimensionalen Kerns zur horizontalen Zerlegung von p Pixeln bestimmt wird, wobei die horizontale Richtung der Blöcke als diejenige der Zeilen des Rasterbildes in einem Modus zum zeilenweisen, sequentiellen Lesen und/oder Übertragen des Rasterbildes definiert ist, bei dem:

- die horizontale Dimension P in der Pixelanzahl jedes Blocks als Vielfaches von p, P = k.p, bestimmt ist und eine Zerlegung mit $\log_p(P)$ Auflösungsebene(n) mithilfe des eindimensionalen Kerns zur horizontalen Zerlegung ausgeführt wird,
- die vertikale Dimension N in der Pixelanzahl jedes Blocks als Vielfaches von n, N = l.n, bestimmt ist und eine Zerlegung mit $\log_n(N)$ Auflösungsebene(n) mithilfe des eindimensionalen Kerns zur vertikalen Zerlegung ausgeführt wird,

**dadurch gekennzeichnet, dass** für gegebene Werte von n und p die Werte von k und l so ausgewählt werden, dass die vertikale Dimension N kleiner ist als die horizontale Dimension P und dass $\log_p(P)$ und $\log_n(N)$ natürliche Zahlen sind.

2. Codierungsverfahren nach Anspruch 1, bei dem n = p = 2, wobei die eindimensionalen Kerne zur horizontalen und vertikalen Zerlegung diskrete Haar-Funktionen für eine Wavelet-Zerlegung sind.

3. Codierungsverfahren nach Anspruch 2, bei dem die zweidimensionale Zerlegung der Blöcke des Rasterbildes die Kombination aus einer vertikalen Zerlegung mit 1 Auflösungsebene und einer horizontalen Zerlegung mit $\log_2(k)$ + 1 Auflösungsebene(n) an Blöcken mit einer vertikalen Dimension von N = 2 Pixeln und einer horizontalen Dimension von P = 2.k Pixeln umfasst.

4. Codierungsverfahren nach Anspruch 3, bei dem aufgrund dessen, dass jeder Block aus k getrennten, aufeinander-

folgenden und quadratischen Unterblöcken ($B_i$) mit jeweils 4 Pixeln besteht, die zweidimensionale Zerlegung eines beliebigen Blocks des Rasterbildes eine Transformation (102) jedes seiner k Unterblöcke mithilfe eines zweidimensionalen Haar-Kerns, der die eindimensionalen Kerne zur vertikalen und horizontalen Zerlegung kombiniert, und anschließend eine horizontale Zerlegung (104) mit $\log_2(k)$ Auflösungsebenen mithilfe des eindimensionalen Kerns zur horizontalen Zerlegung umfasst, welche auf k Komponenten mit starker Entropie, die durch die Transformation der k Unterblöcke erhalten werden, angewendet wird.

5. Codierungsverfahren nach einem der Ansprüche 1 bis 4, das ferner folgende Schritte umfasst:

   - nach dem Schritt (100, 102, 104), bei dem aufeinanderfolgende zweidimensionale Zerlegungen der Blöcke des Bildes ausgeführt werden, Bereitstellen (200) einer ersten Binärdatenreihe, die aus Wörtern besteht, die umcodiert werden müssen, und
   - entropische Umcodierung (202, 204, 206, 208, 210, 212) der ersten Binärdatenreihe in eine zweite Binärdatenreihe, die durch Verwendung (208) eines vorbestimmten entropischen Codes mit variabler Länge der codierten Wörter komprimiert wird, um jedes Wort der ersten Binärdatenreihe in ein umcodiertes Wort umzucodieren,
   und wobei es auf Basis einer mit B bezeichneten, vorbestimmten Anzahl an niederwertigsten Bits, die als einen Rauschpegel der Wörter der ersten Binärdatenreihe darstellend betrachtet werden, die Anwendung der nachfolgenden Schritte auf jedes Wort der ersten Binärdatenreihe umfasst:
   - Unterteilung (206) des Worts in erste und zweite Unterwörter, wobei das erste Unterwort die B niederwertigsten Bits des Worts und das zweite Unterwort die anderen höchstwertigen Bits des Worts umfasst,
   - Anwendung (208) des vorbestimmten entropischen Codes auf das zweite Unterwort, um ein umcodiertes zweites Unterwort zu erhalten, und
   - Erhalten (210) des umcodierten Worts durch Verkettung des ersten Unterworts und des umcodierten zweiten Unterworts.

6. Codierungsverfahren nach einem der Ansprüche 1 bis 5, das einen Schritt (100) umfasst, bei dem Pixelwerte des Bildes zeilenweise, von der ersten Zeile bis zur letzten Zeile des Bildes, und sequentiell gelesen werden, und wobei beim Lesen von N aufeinanderfolgenden Zeilen, die mindestens einen Block mit N Zeilen und P Spalten umfassen, die zweidimensionale Zerlegung (102, 104) des mindestens einen Blocks ausgeführt wird.

7. Codierungsverfahren nach Anspruch 6, das beim Lesen der N aufeinanderfolgenden Zeilen folgende Schritte umfasst:

   - Lesen und Speichern (100) der ersten N - 1 aufeinanderfolgenden Zeilen,
   - beim Erzeugen der N-ten Zeile Ausführen (102, 104) der zweidimensionalen Zerlegung des mindestens einen Blocks dieser Zeile.

8. Vorrichtung zur Bilderfassung, die Mittel (22) zum zeilenweisen, sequentiellen Lesen von Pixelwerten eines Bildes von der ersten Zeile bis zur letzten Zeile aufweist, **dadurch gekennzeichnet, dass** sie Codierungsmittel (30) aufweist, die zum Ausführen der Schritte eines Codierungsverfahrens nach Anspruch 6 oder 7 ausgelegt sind.

9. Vorrichtung zur Bilderfassung nach Anspruch 8, die eine bildgebende Schaltung (22) zur Erfassung von Bildern und zur analogen/digitalen Umwandlung dieser erfassten Bilder sowie eine Koprozessorschaltung (28) aufweist, die sich von der bildgebenden Schaltung (22) unterscheidet und für eine digitale Verarbeitung der erfassten Bilder elektrisch mit dieser verbunden ist, bei der die Codierungsmittel (30) in die bildgebende Schaltung (22) integriert sind.

10. Computerprogramm, das von einem Kommunikationsnetz heruntergeladen werden kann und/oder auf einem computerlesbaren Träger gespeichert ist und/oder von einem Prozessor ausgeführt werden kann, **dadurch gekennzeichnet, dass** es Programmcodebefehle zum Ausführen der Schritte eines Codierungsverfahrens nach einem der Ansprüche 1 bis 7 aufweist, wenn das Programm auf einem Computer ausgeführt wird.

## Figure 1

## Figure 4

## Figure 2

# Figure 3

EP 2 327 217 B1

## Figure 5

B = 2

| s | 0 | 0 | 0 | 0 | 0 | 1 | 0 | 1 | 1 | 0 |

| s | 0 | 0 | 0 | 0 | 0 | 1 | 0 | 1 | | 1 | 0 |

| 0 | 0 | 0 | 1 | s | 0 | 1 | | 1 | 0 |

| 0 | 0 | 0 | 1 | s | 0 | 1 | 1 | 0 |

200
202
204
206
208
210
212

## Figure 6

M1 — | 0 | 0 | 0 | 0 | 1 | 1 | 1 | 1 | 1 | 1 |

50 | 0 | 1 | 1 | 0 | 1 | 0 | 0 | 0 | 0 | 0 | 54

clk

s | 1 | 0 | 0 | 0 | 0 | 0 | 0 | 0 | 0 | 0 | out

52

M2 — | 1 | 1 | 0 | 0 | 0 | 1 | 1 | 1 | 1 | 1 |

## RÉFÉRENCES CITÉES DANS LA DESCRIPTION

**Documents brevets cités dans la description**

- US 2004136602 A

- EP 0817494 A

**Littérature non-brevet citée dans la description**

- **ZHIQIANG LIN et al.** A CMOS image sensor for focal plane décomposition. *IEEE International Symposium on Circuits And Systems,* Mai 2005, vol. 5, 5322-5325

- **ASHKAN OLYAEI et al.** Focal-plane spatially over-sampling CMOS image compression sensor. *IEEE Transactions on Circuits and Systems I,* Janvier 2007, vol. 54 (1), 26-34